# EUROPEAN PATENT SPECIFICATION

(11) **EP 2 949 197 B1**
(45) Date of publication and mention of the grant of the patent: **22.08.2018**
(21) Application number: 14743341.1
(22) Date of filing: 24.01.2014
(51) Int. Cl.: A01D 34/73

(54) **BLADE FOR CUTTING GRASSES IN GENERAL**
MESSER ZUM SCHNEIDEN VON GRÄSERN IM ALLGEMEINEN
LAME POUR LA COUPE D'HERBES EN GÉNÉRAL

(30) Priority: 25.01.2013 ES 201330084 P
(43) Date of publication of application: 02.12.2015
(73) Proprietor: Dominguez de Vidaurreta Mendinueta, Miguel Angel, 31840 Uharte Arakil (Navarra) (ES)
(72) Inventor: Dominguez de Vidaurreta Mendinueta, Miguel Angel, 31840 Uharte Arakil (Navarra) (ES)
(86) International application number: PCT/ES2014/070051
(87) International publication number: WO 2014/114841

(56) References cited:
- FR-A1- 2 855 715
- US-A- 2 799 985
- US-A- 4 628 672
- US-A- 4 977 735
- US-A- 5 209 052
- US-A1- 2011 277 438
- US-A1- 2012 198 807
- US-B1- 6 415 591

## Description

### OBJECT OF THE INVENTION

The present invention refers to a blade for cutting grasses in general, that is foreseen for making a clean cut of any kind of grass, whether lawn, forage, etc. the blade being applicable to gardening and agricultural machinery intended to carry out any kind of work consisting of cutting and collecting grass, forage, etc.

The aim of this invention is to provide a cutting blade applicable to the kind of machinery previously mentioned, which cleanly cuts the grass and also creates an air flow that aids in expelling the cut grass to the exterior, or introducing this grass into appropriate containers.

### BACKGROUND TO THE INVENTION

Currently the cutting of grass, forage, etc, is done by means of a straight blade, which in certain cases cooperates with an air generating element (ventilator-extractor) to expel the cut grass.

Therefore, the work that is done to cut grass using conventional systems can be said to be established in two well-differentiated parts, one corresponding to the cutting of the grass and the other corresponding to the absorption and expulsion of cut grass to a deposit or collection recipient.

The conventional systems referred to for cutting grasses imply on the other hand that the machines used for such purpose suffer continuous blockages which hinder and slow down the work, especially when the grasses being cut are somewhat long or are damp.

In addition, the blades that are currently used in cutting grasses are straight blades and make the cut by striking, at times leaving threads that then dry and spoil the appearance of the terrain, as can happen a lawn in the case of turf lawn, regardless of the fact that it is a rough cut having been done by striking.

The patent US 4628672 describes a blade for cutting grasses of the kind constituted by one or various arms with a central hole, intended for rotating around a drive axle, which has a continuous and curved leading edge, but limited at the distal end of each arm, prolonged laterally to the tail part, while the trailing edge has a small portion pointing upwards forming a small flap; the patent US 6415591 similarly describes a blade with an elongated shape, intended to be coupled with the rotor shaft of a grass cutter, and which also has an arched cutting edge limited at its distal end, also having small flaps intended to create a lifting current. However, the flaps described in both patents, given their straight shape and reduced size in relation to the blade, would create little air current, while at the same time the limitation in the sharpened part at the end of each blade would also inadequately limit the effectiveness of the cut, which would impede reaching sufficient revolutions and sustaining them in time, especially working in conditions of tall or wet grass, which would impede the creation an ascending air current with sufficient strength.

### DESCRIPTION OF THE INVENTION

The blade described has been designed to resolve the problem previously explained, based on a simple but efficient solution.

More specifically, the blade of the invention, applicable to an agricultural machine such as a lawn mower, a cutting or shrub clearing machine, etc. has the peculiarity of being made from a type of propeller with two or more arms, so that each blade has a cutting edge which extends to the curved outer edge, both sharpened with a continuous sabre-shaped edge, and another trailing edge with a vane or propeller blade shape, with which an air flow is generated to expel the cut grass and, as the case may be, to introduce said grass into a recipient or collection container.

In short, it is a blade with cutting areas that extend from the axis or centre of the blade itself to the external curved edge of each blade, where the cutting edge continues, while opposite on each blade there is a trailing edge in the shape of a fan or propeller blade which generates an air flow which drags the cut grass or shrub, lifting it to facilitate cutting in successive blade rotations.

Therefore, using the blade of the invention cutting is not done by striking as occurs traditionally, but rather the material to be cut is sliced, in other words from one side to the other in one single action, the blade gliding over the lawn or grass to be cut, which enables the blade to slide and maintain a high level of rotation, to obtain an air flow capable of lifting, dragging and ejecting the cut grasses.

As the blades are sabre shaped, being sharpened from the centre of the piece along the whole leading edge as well as the exterior end in one continuous line, this makes it possible to cut grasses or turf lawns slicing across the whole surface, while also revising at each blade rotation, obtaining cleanly cut grasses or lawns with a top level finish.

In short, as cutting is done by slicing and not by striking as occurs traditionally, the blade of the invention cuts clean and straight, without filaments that dry out after cutting, so in the case of lawn mowing, the lawn will be uniformly green with no dry ends.

With the blade of the invention you can also obtain considerable energy savings in the work, both in terms of the fuel level of the machine in which the blade is used, with the consequent reduction in emissions of CO₂, as well as significant savings in the time used in cutting and the effort applied to the work, as with the blade of the invention the cutting capacity is much greater than with conventional blades.

Finally, the blade will be made preferably of forged steel in order to obtain the shape of a propeller blade along the trailing edge, and a curved shape and sharpened along the outer and leading edge.

### DESCRIPTION OF THE DRAWINGS

To complement the description below and with the aim of helping to better understand the characteristics of the invention, attached is this descriptive report, forming an integral part of the same, a set of drawings which, by way of illustration but not limiting, represent the following:

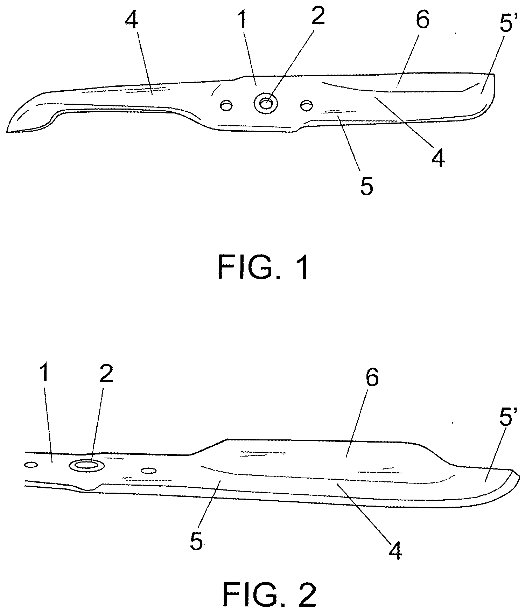

Figure 1.- shows a representation corresponding to a perspective view of the cutting blade object of the invention.
Figure 2.- shows a detail of one of the arms of the blade represented in the previous drawing.

### PREFERRED EMBODIMENT OF THE INVENTION

As can be seen in the drawing referred to, the cutting blade of the invention is made of one body or piece (1) which is mounted with a rotating facility through the opening (2) on the driving axle of the machine concerned, so that in any case the piece (1) comprises two equal arms (4), opposite each other, although it may have a greater number of arms, so that in any case the arms (4) have a sharp leading edge (5) which curves at the end as indicated (5'), in other words the sharpened cutting edge extends from the centre of the body or piece (1) of the blade, to the outer end in a curved continuous line, and opposite to the leading edge (5) having a trailing edge (6) that is shaped like a propeller blade, so that when rotating this configuration of trailing edge (6) carries with it the drag and propulsion of the cut material towards the exterior, or towards a collection bin. In other words, an air flow is created which drags the cut material and at the same time raises the material to be cut in successive rotations of the blade piece (1).

Evidently, the leading edge (5) of each blade, has a continuous line (5') curved to its outer end, defining the front or leading edge of said blade, while the trailing edge (6) defines the rear edge of the same, so the latter adopts the form of a fan blade to produce the air flow which serves, as already said, to expel the cut material to a bin or to the exterior, and on the other hand by suction lifts the material which will be cut in the successive rotation.

## Claims

1. Blade for cutting grasses in general, foreseen for cutting grasses, shrubs or turf lawn, made up of 2 or more arms with a central opening for its mounting on a rotating axis, also being applicable to a cutting or shrub clearing machine, being made of one piece (1) mounted with a rotating facility on the driving axle of the machine through the opening (2), piece (1) in which two or more arms (4) are established, **characterized in that** each arm (4) of piece (1) has a sharp leading edge (5) with a continuous and curved line from the centre of the piece (1) to its outer end (5'), while opposite the leading edge (5), is a rear trailing edge (6), which has the shape of a fan vane or propeller blade, to provide an air flow by which the cut material is ejected to a collector or to the exterior, while also suction raising the material to be cut.

## Patentansprüche

1. Messer zum Schneiden von Gräsern im Allgemeinen, ausgelegt zum Schneiden von Gräsern, Futterwiesen oder Rasen, bestehend aus 2 oder mehr Flügeln mit einem mittigen Loch für die Montage an einer Drehachse, einsetzbar auch in einer Schneidmaschine oder einer Motorsense, bestehend aus einem Teil (1), das mithilfe des Loches (2) drehbar auf die Antriebswelle des Geräts montiert ist und an dem zwei oder mehr Flügel (4) vorgesehen sind, **dadurch gekennzeichnet, dass** jeder Flügel (4) des Teils (1) über eine scharfe Schnittkante (5) mit durchgehender und von der Mitte des Teils (1) bis zum äußeren Ende (5') reichende Schneide verfügt, während auf der gegenüberliegenden Seite der Schnittkante (5) eine hintere Austrittskante (6) in Form eines Ventilatorflügels oder Propellerblatts vorgesehen ist, um einen Luftstrom zu schaffen, mit dessen Hilfe das geschnittene Material in einen Behälter oder nach außen ausgeworfen und gleichzeitig das zu schneidende Material durch die Saugkraft angehoben wird.

## Revendications

1. Lame pour la coupe d'herbes en général, conçue pour couper les herbes, les fourrages ou le gazon, constituée par au moins 2 pales avec un orifice central pour leur montage sur un arbre tournant, également applicable sur une machine faucheuse ou débroussailleuse, qui est constituée d'une pièce (1) montée en rotation sur l'arbre moteur de la machine à travers l'orifice (2), pièce (1) comportant au moins deux pales (4), **caractérisée par le fait que** chaque pale (4) de la pièce (1) présente un bord d'attaque affûté (5), avec un taillant constant et à courbure allant du centre de la pièce (1) à son extrémité extérieure (5'), tandis qu'à l'opposé du bord d'attaque (5), elle comporte un bord arrière et de fuite (6) ayant la forme d'une ailette de ventilateur ou d'une pale d'hélice, pour créer un flux d'air qui assure l'expulsion des végétaux coupés vers un bac de ramassage ou vers l'extérieur, tout en soulevant également par aspiration l'herbe avant la coupe.
